# EUROPEAN PATENT SPECIFICATION

(11) **EP 3 651 414 B1**
(45) Date of publication and mention of the grant of the patent: **05.07.2023**
(21) Application number: 19206072.1
(22) Date of filing: 16.02.2011
(51) Int. Cl.: H04L 41/06, H04L 41/00, H04L 43/04, H04L 41/22, H04L 43/0817, H04L 43/0852, H04L 43/0888

(54) **REMOTE DEVICE MANAGEMENT**
FERNGESTEUERTE VORRICHTUNGSVERWALTUNG
GESTION DE DISPOSITIFS À DISTANCE

(30) Priority: 18.02.2010 US 70823210
(43) Date of publication of application: 13.05.2020
(62) Divisional of application: 11154728.7
(73) Proprietor: Hand Held Products, Inc., Skaneateles Falls, New York 13153 (US)
(72) Inventor: POWILLEIT, Sven M. A., Morristown, New Jersey 07962-2245 (US); CABALLERO, Aldo M., Morristown, New Jersey 07962-2245 (US); PORTER, Christopher W., Morristown, New Jersey 07962-2245 (US); PAYNE, Gregory, Morristown, New Jersey 07962-2245 (US); PETTINELLI, John, Morristown, New Jersey 07962-2245 (US)
(74) Representative: Haseltine Lake Kempner LLP

(56) References cited:
- WO-A2-02/054654
- GB-A- 2 290 872
- US-A1- 2003 172 150
- US-A1- 2004 042 472

## Description

### TECHNICAL FIELD

The present invention relates to monitoring networked remote devices such as portable data terminals, indicia readers or barcode scanners, configured to communicate with a server, and, more particularly, to a highly effective system and method for monitoring, analyzing and managing remote device failure and/or performance.

### BACKGROUND INFORMATION

Remote devices such as portable data terminals, optical and laser indicia readers, barcode scanners, and other mobile computers, for example, typically read data represented by printed indicia such as symbols, symbology, and bar codes, for example. One type of symbol is an array of rectangular bars and spaces that are arranged in a specific way to represent elements of data in machine readable form. Optical indicia reading devices typically transmit light onto a symbol and receive light scattered and/or reflected back from a bar code symbol or indicia. The received light is interpreted by an image processor to extract the data represented by the symbol. Laser indicia reading devices typically utilize transmitted laser light. One-dimensional (1D) optical bar code readers are characterized by reading data that is encoded along a single axis, in the widths of bars and spaces, so that such symbols can be read from a single scan along that axis, provided that the symbol is imaged with sufficiently high resolution.

In order to allow the encoding of larger amounts of data in a single bar code symbol, a number of 1D stacked bar code symbologies have been developed which partition encoded data into multiple rows, each including a respective 1D bar code pattern, all or most all of which must be scanned and decoded, then linked together to form a complete message. Scanning still requires relatively higher resolution in one dimension only, but multiple linear scans are needed to read the whole symbol.

A class of bar code symbologies known as two dimensional (2D) matrix symbologies have been developed which offer orientation-free scanning and greater data densities and capacities than 1D symbologies. 2D matrix codes encode data as dark or light data elements within a regular polygonal matrix, accompanied by graphical finder, orientation and reference structures.

Many other classes of bar code symbologies and/or indicia have been known and are in widespread use including, for example, PDF417, MicroPDF417, MaxiCode, Data Matrix, QR Code, Aztec, Aztec Mesas, Code 49, EAN-UCC Composite, Snowflake, Dataglyphs, Code 39, Code 128, Codabar, UPC, EAN, Interleaved 2 of 5, Reduced Space Symbology, Code 93, Codablock F, and BC412, Postnet, Planet Code, British Post, Canadian Post, Japanese Post, OCR-A, OCR-B, Code 11, UPC, EAN, MSI, and Code 16K. Further, indicia may be represented by printed indicia, symbol indicia, biogenic/biometric indicia or any information extracted from a captured image.

Conventionally, a reader, whether portable or otherwise, includes a central processor which directly controls the operations of the various electrical components housed within the bar code reader. For example, the central processor controls detection of keypad entries, display features, wireless network communication functions, trigger detection, and bar code read and decode functionality. More specifically, the central processor typically communicates with an illumination assembly configured to illuminate a target, such as a bar code, and an imaging assembly configured to receive an image of the target and generate an electric output signal indicative of the data optically encoded therein. The output signal is then converted by an analog to digital converter and analyzed by algorithms stored in memory to decode any barcode contained in the captured image. Further, the central processor often controls a network interface configured to communicate over a wireless or wired network with a host server.

All remote devices have complex electronic system components that can fail for several reasons such as battery degradation, physical degradation of wear components such as docking station interfaces, memory failures, illumination, aimer, and imaging assembly failures as well as failure due to environmental factors. Remote devices are subject to repetitious use and each use reduces the mean time to failure of each device. Currently, the failure of a system component that renders a remote device inoperable requires a user in the field to fix the error such as by consultation with a user manual or other documentation or communication with the original equipment manufacturer (OEM). In those cases in which the device cannot be fixed in the field, the user often has to return the system component or device, such as by a return material authorization form, to the OEM and wait for the device to be repaired or a replacement to be sent. The user then suffers from device downtime and reduced productivity and/or throughput.

Accordingly, there is a need for a predictive remote device management system configured to monitor networked devices and more effectively manage remote device and/or system component failure and performance.

The invention is set out in the appended set of claims.

US2003/0172150A1 discloses a method of operating a network system may involve receiving data indicating a configuration of components that are included in the network system, detecting a failure of one of the components, computing an availability (e.g., by calculating the instantaneous availability) of the network system from the data in response to detecting the failure, and storing data indicative of the availability of the network system.

US2004/0042472Al discloses a system in which a surveillance computer predicts impending failures by comparing the time required while a transmitted dummy electronic message returns to the surveillance computer, a mean value of the required time, a time required while the dummy electronic message passes through the message broker, a mean value of the time for the passage, a time required for a dummy electronic message transmission between each computer and a mean value of the time for transmission to each base value.

GB2290872A discloses an apparatus for indicating a fault condition in a machine having a plurality of parameters each having levels being dependent upon machine performance includes a sensor adapted to produce an electrical signal in response to the level of one of the parameters; and a processor for identifying a trend in the parameter level in response to the electrical signal, calculating the duration and rate of change or slope of the trend; and determining whether a first warning threshold is exceeded in response to the duration and slope of the trend, the first warning threshold being a function of duration and slope.

WO02054654A2 discloses a method and apparatus for predicting failure in a system that incorporates known information about system component failure into a system model and uses the model with or without other acquired system data to predict the probability of system failure.

### BRIEF DESCRIPTION OF THE DRAWINGS

The present invention is disclosed with reference to the accompanying drawings, wherein:
FIG. 1 is a plan view and a side perspective view of two exemplary remote devices.
FIG. 2 is a block schematic diagram of an exemplary remote device according to the present invention.
FIG. 3 is a block schematic diagram of an exemplary remote device management system according to the present invention.

It will be appreciated that for purposes of clarity and where deemed appropriate, reference numerals have been repeated in the figures to indicate corresponding features.

### DETAILED DESCRIPTION

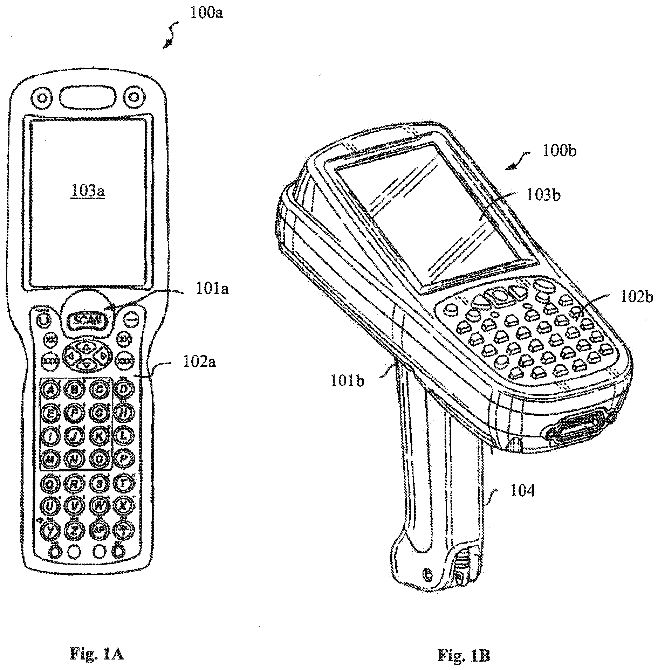

Referring to FIGS. 1A and IB, two exemplary remote devices 100 for reading/scanning printed indicia are shown. The remote device housing can be shaped so as to fit comfortably into a human hand using a handle portion 104 and can include a finger actuatable scan/capture or trigger button 101 as well as a keypad 102 for inputting data and commands, power button, and antenna for facilitating communication with a local or remote host processor, for example. The remote device also includes a display 103, such as an LCD or OLED display, for example, for displaying information to the user. If the display 103 is a touch screen, a stylus (not shown) may also be included to facilitate interaction with the touch screen. An aperture in the housing is included such that the illumination 208 and imaging optics 204 have substantially unobstructed access to the target 214. The remote device can also include a power port for receiving a power supply 228 as well as one or more communication ports for facilitating wired or wireless communication with a network interface 234. Although the present invention is described with respect to a remote device, the invention can also be utilized in any bar code scanner, mobile device, mobile computer, or personal data assistant, for example.

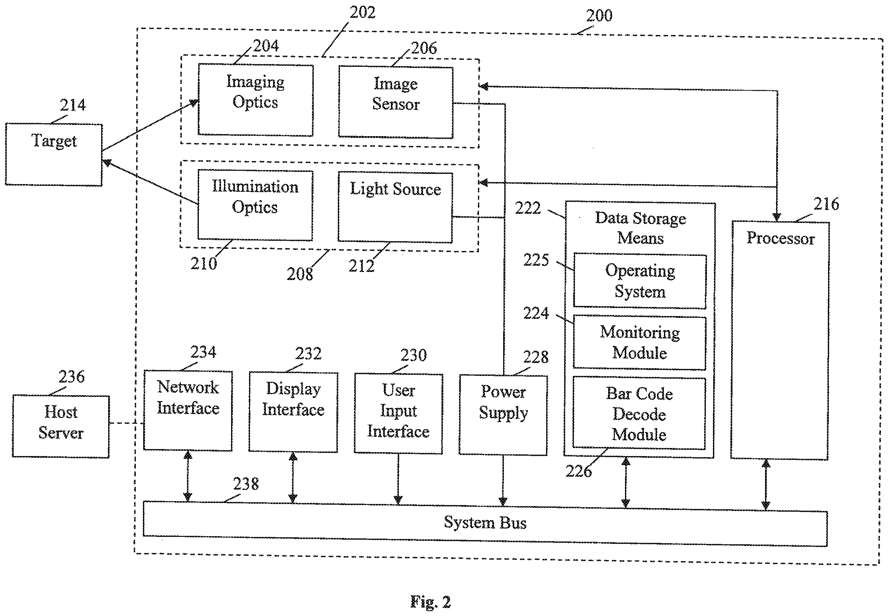

Referring to FIG. 2, there is shown a block schematic diagram of the basic structures that together comprise a remote device 200 according to the present invention. The remote device 200 includes an illumination assembly 208 for illuminating a target 214, such as a bar code, and an imaging assembly 202 for receiving an image of the target 214 and generating an electric output signal indicative of the pixel data optically encoded therein. The illumination assembly 208 includes at least one light source 212 together with illumination optics 210, such as one or more reflectors, for directing light from the light source 212 in the direction of the target 214. The light source 212 can include at least one LED configured to emit light in the near-infrared range and/or at least one LED configured to emit light in the visible range, for example. The imaging assembly 202 includes a 2D image sensor 206, such as a CCD, CMOS, NMOS, PMOS, CID, or CMD solid state imagine sensor, along with imaging optics 204 for receiving and focusing an image of the target 214 onto the image sensor 206.

Still referring to FIG. 2, the remote device 200 further includes a processor 216 which controls the operation of the remote device 200 by implementing program instructions it retrieves from the data storage means 222. More specifically, the processor 216 is configured to receive, output and process data, including image/pixel data, operate the imaging 202 and illumination 208 assemblies, and communicate with a system bus 238, among other operations. Further, the processor 216 may be configured to control the illumination of the light source 212, the timing of the image sensor 206, analog-to-digital conversion, transmission and reception of data to and from a processor 216 of a remote computer or host server 236 external to the reader through a network interface 234, such as an RS-232, RS-485, USB, Ethernet, Wi-Fi, Bluetooth^{™}, IrDA or Zigbee interface, control a user input interface to manage user interaction with a scan/trigger button 101 and/or keypad 102, and control an output device 103, such as an LCD or an OLED display, through the display interface 232. The processor 216 can be a microprocessor such as a VLSI or ASIC integrated circuit microprocessor. The remote device 200 also includes one or more power supplies 228, such as one or more batteries and/or circuitry for receiving an alternating current, and a user input interface 230 for receiving data from a user input device, such as a keyboard, keypad, trigger and/or touch screen. The remote device 200 system components shown in FIG. 2 are preferably supported on one or more printed circuit boards (not shown).

In the embodiment shown in FIG. 2, the data storage means 222 includes local, network-accessible, removable and/or non-removable memory, such as RAM, ROM, and/or flash. Further, the data storage means 222 includes program instruction application modules such as, for example, an operating system 225, a bar code decode module 226 and a monitoring module 224. The operating system 225 contains program instructions that, when implemented by the processor 216, manage the operation of the various system components. The barcode decode module 226 includes program instructions that, when executed by the processor 216, retrieve image pixel data from the image sensor 206 and decode any bar code contained in the image as is known in the art.

The monitoring module 224 includes program instructions that, when implemented by the processor 216, acquire one or more performance parameter values and communicate the performance parameter values to the host server 236 through the network interface 234 continuously, on a periodic basis, and/or upon request from the server 236. Exemplary performance parameter values include accumulated processor run time, processor failure, network interface throughput, image engine to memory transmission time, memory utilization, full memory utilization failure, memory read/write failure, battery level, battery failure, primary power source failure, network connection failure, application identification, screen identification, timestamp, battery charge/discharge cycles, dock/undock cycles, dock interface failure, keypad/trigger presses, keypad/trigger failure, display failure, touch screen presses, and touch screen presses per unit area, among others. Preferably, the monitoring module 234 acquires a plurality of performance parameter values so as to effectively monitor a plurality of system components and/or events.

In order to communicate a performance parameter value to the host server 236, the monitoring module 224 first communicates with at least one system component in order to acquire the performance parameter value. For example, to determine touch screen presses, the display interface 232 can communicate an event to the monitoring module 224 which can update or set a variable, of integer or floating point data type, for example, representing the total number of accumulated touch screen presses or the number of touch screen presses occurring since the last communication with the host server 236. Accordingly, the performance parameter value can include those monitored events occurring subsequent to the last communication with the host server 236 or the number of monitored events occurring subsequent to a specified point in time, for example.

The performance parameter value can also consist of or include an error code such as in the event of a system component failure. For example, it is well known in the art that data storage means 222 or memory system components can be configured to issue an error code to the system bus 238 upon read/write failure due to a corrupt memory block or a full memory utilization state, for example. In the case of a memory read/write error, it is preferable that a performance parameter value, including an error code, is automatically communicated to the monitoring module 224 where it can be transmitted to the host server 236 for further processing. The memory utilization performance parameter value is preferably communicated to the host server 236 on a periodic basis, upon request from the host server, or contemporaneously in the event of a system component failure (e.g. initiated by the receipt by the monitoring module of a performance parameter value including an error code). Also preferably communicated to the host server 236 by the monitoring module 224 is a remote device identifier to provide the host server with information regarding the device from which the parameter values were communicated.

In the event of a significant failure as defined by the network administrator, or as defined by, or inherent in, the system configuration, the remote device 200 can be configured to retrieve its last known successful network communication channel to communicate a performance parameter value including an error code. Further, the device 200 can also be configured to communicate a performance parameter value including an error code by operating on other than its primary power source, if necessary, such as a secondary battery.

In one exemplary embodiment, the monitoring module 224 maintains and logs, for at least the period subsequent to the prior communication with the host server 236, the accumulated number of keypad/trigger presses, accumulated processor clock cycles, accumulated network interface 234 throughput, battery charge/discharge cycles and accumulated touch screen presses, for example, and the remote device 200 communicates these performance parameter values to the host server 236 periodically as requested. Further, the monitoring module 224 automatically receives a performance parameter value in the form of an error code upon memory read/write failure, battery or primary power source 228 failure, keypad/trigger failure or touch screen failure. Upon receipt of a performance parameter value including an error code, the monitoring module 224 automatically communicates the performance parameter value to the system bus 238, network interface 234, and host serve 236r.

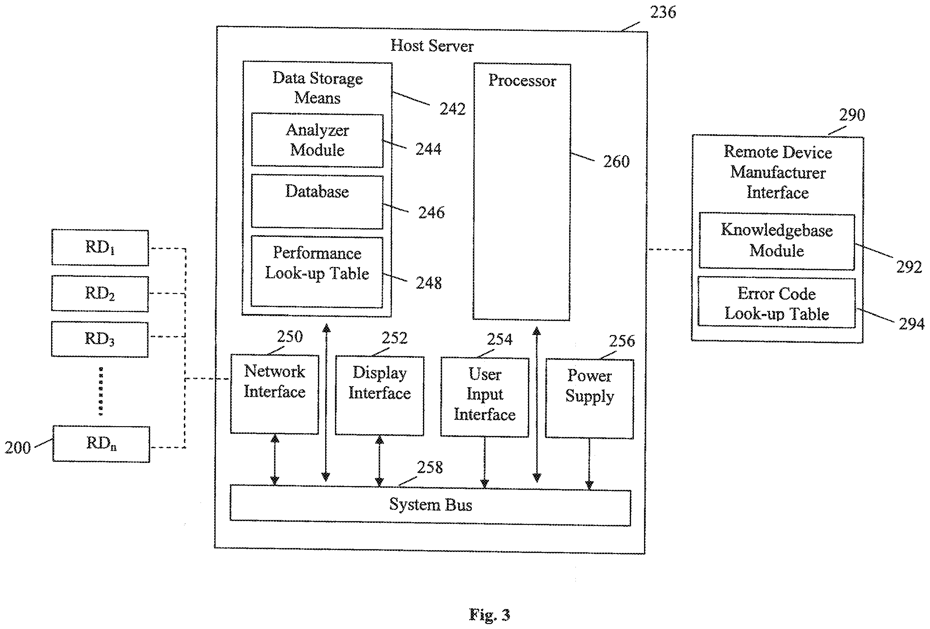

Referring to FIG. 3, a remote device monitoring system is shown as including a plurality of remote devices RD₁₋ₙ 200, a host server 236, and an optional remote device manufacturer interface 246. The host server 236 includes at least a processor 260, system bus 258, user input interface 254 configured to communicate with a user input device such as a mouse or keyboard, display interface 252 configured to communicate with a display such as a touch screen, LCD, or OLED, network interface 250 configured to communicate with at least one remote device 200 and at least one data storage means 242 including a database 246, a performance look-up table 248, and at least one analyzer module 244. The performance look-up table 248 can be included in the database 246 or can be a separate database or table. The analyzer module 244, or another module stored in the data storage means 242 of the host server 236, includes program instructions that, when implemented by the processor 260, receive at least one performance parameter value from at least one of the remote devices 200. The receipt can be initiated by the communication from at least one of the remote devices 200 or can be initiated by the host server's 236 request to at least one of the remote devices 200, for example. Upon receipt of performance parameter value(s) by the host server 236, the values are stored in the database 246. Optionally, the database 246 is organized by remote device identifier such that performance parameter values received by the host server 236 are associated with the appropriate remote device 200 in the database. Upon receipt of performance parameter values, the values of the respective database 246 entry are replaced by the most recent values or the values are added to data already present in the database 246 such that historical performance parameter values are maintained.

The performance look-up table 248 is configured to store at least one predetermined failure value and/or at least one calculated failure value associated with at least one performance parameter. Preferably, the performance look-up table 248 is initially populated with predetermined values for each performance parameter, the predetermined values being generally known to the remote device 200 original equipment manufacturer (OEM) as representing known failure values. Alternatively, the performance look-up table 248 is initially populated upon system component failure whereby the performance look-up table 248 is populated with the value of the performance parameter value received contemporaneously with the failure. In another alternative configuration of the performance look-up table 248, each failure value is replaced by a value calculated based on the value received contemporaneously with the current failure and the failure value in the performance look-up table 248 at the time of the failure, such as by averaging or other calculation, for example. In operation, the analyzer module 244 is configured to compare the most recently received performance parameter value with the corresponding performance parameter value in the performance look-up table 248.

In one exemplary embodiment, the battery charge/discharge cycles parameter value is initially set to 100 in the performance look-up table 248 because 100 charge/discharge cycles is known by the OEM to result in battery failure in 80% of OEM batteries. Accordingly, in operation, the host server 236 periodically polls the remote device 200 to receive, from the monitoring module 224, the accumulated battery charge/discharge cycles performance parameter value. The analyzer module 244 then compares the value received by the host server 236 to the value of 100 in the performance look-up table 248. If the value is greater than 100, the analyzer module 244 can predict that failure is more than 80 percent likely to occur on the next charge/discharge cycle.

In another exemplary embodiment, upon battery failure, for example, the battery charge/discharge cycles performance parameter value previously stored in the database 246, for example, 100, is replaced by the value received contemporaneously with the current failure, for example, 80, as 80 charge/discharge cycles is likely a more accurate representation and prediction of the likely failure of the OEM battery in the user's environment/network. In this embodiment, the analyzer module 244 more accurately predicts the failure of remote device system components in the respective remote device network based on the environment as well as usage level and activities of those remote device users.

In yet another embodiment, the administrator of the host server 236 can define the values of the performance look-up table 248. For example, if the host sever 236 administrator determines that battery supply is not important in the remote device 200 network environment, the administrator can set the battery charge/discharge cycles performance parameter value of the performance look-up table 248 to 200, for example, such that the analyzer module 244 does not determine that failure is imminent until it is 99 percent likely to occur on the next charge/discharge cycle, for example.

Still referring to Fig. 3, also shown is an optional remote device manufacturer interface 290 such as a web-based interface communicating with one or more host servers 236 though at least one portal. The remote device manufacturer interface 290 includes at least a knowledgebase module 292 and an error code look-up table 294 having at least one entry for each error code wherein each entry further includes information related to the error such as the error condition, possible causes and suggested solutions. The error codes and error information can be defined by the OEM as the OEM may be uniquely knowledgeable as to the error codes communicated by the various system components of the OEM device 200.

In one embodiment in which the analyzer module 244 of the host server 236 receives an error code as at least part of a performance parameter value, the host server 236, and/or the analyzer module 244, can communicate the error code to the remote device manufacturer interface 290 causing the knowledgebase module 292 to query the error code look-up table 294, based on the communicated error code, and retrieve error code information which it then communicates to the host server 236 where the information can be displayed to the host server 236 administrator. Accordingly, upon remote device 200 system component failure, the administrator of the host server 236 can automatically receive information regarding the failure thereby drastically reducing the effort required to diagnose and potentially resolve the cause of a remote device 200 failure.

In another embodiment, one of the database 246 or the performance look-up table 248 includes the one or more OEM error codes associated with a performance parameter. Accordingly, upon a determination by the analyzer module 244 that a system component is nearing likely failure, the analyzer module 244 retrieves the error code(s) likely to result from failure of the system component and automatically communicates the error code to the remote device manufacturer interface 290 which automatically responds by communicating error code information, retrieved from the error code look-up table 294, to the host server 236. The remote device manufacturer interface 290 and/or the knowledgebase module 292 can also be configured to communicate at least one of system update information, technical documentation and system upgrade information to the host server as requested by the administrator or as necessary as determined by the OEM.

In those embodiments in which the analyzer module 244 is configured to determine likely failure of a system component, the host server 236 can also be configured to automatically communicate one or more notifications based on a trigger condition. The notification can be in the form of a simple graphical display on the host server 23, automated notification sent to the OEM such as a return material authorization request notification (RMA), or an automated e-mail message optionally containing error information retrieved from the knowledgebase module 292 and/or an RMA prepared for submission to the OEM at the option of the administrator. Preferably, the notification includes the remote device identifier of the failed device.

In one embodiment, the trigger condition(s) are predetermined by the OEM. In another embodiment, a notification is sent based on a trigger condition communicated to the analyzer module 244 of the host server 236 by the host server administrator. For example, should the administrator determine that, for example, batteries are not important in the environment in which the remote devices are being used, the administrator can communicate with the analyzer module 244 to set a trigger condition such that the notification sent is an e-mail message to the administrator and not an RMA. Accordingly, when a battery charge/discharge performance parameter value is received that indicates likely failure, as determined by the analyzer module 244 comparison with the corresponding value in the performance look-up table 248, the administrator will be notified by e-mail and will then decide the next course of action with respect to the failure. Alternatively, the administrator can determine that no notifications will be sent with respect to the battery charge/discharge cycles performance parameter or any other parameter. Even further, the administrator can set a trigger condition in the analyzer module 244 such that a graphical display on the host server 236, an e-mail message to the administrator containing error code information, and an RMA to the OEM can be provided upon a device 200 system component failure, or any other notification or combination of notifications.

In the embodiments in which an RMA is automatically communicated to the OEM based on predefined trigger condition(s), a replacement remote device 200 or system component can be automatically shipped to the user/administrator upon receipt by the OEM of the RMA. Along with the replacement component or device 200, instructions with respect to shipping the failed device 200 to the OEM can optionally be included. Accordingly, in this embodiment, the analyzer module is configured to predict a remote device 200 system component failure, as described above, and automatically generate an RMA request, based on comparison with a value in the performance look-up table 248 and predefined trigger condition, which can be promptly responded to by the shipping of a replacement component or device 200 by the OEM thereby significantly reducing or eliminating device downtime.

Even further, the location of the remote device software/data storage means/memory/disk image, or the image itself, can be stored in the database 246 entry corresponding to the remote device identifier for each device 200 and sent along with the RMA request so that the OEM can retrieve the location of the software image and/or the software image itself, optionally by communication through the remote device manufacturer interface 290, and ship a replacement remote device 200, if necessary, that includes a substantially identical software configuration. Similarly, the identification of any unique device 200 hardware component(s) can be stored in the database 246 entry corresponding to the remote device identifier for each device 200 and sent along with the RMA notification so that the OEM can replace the failed device 200, if necessary, with the appropriate hardware configuration.

In another embodiment, the analyzer module, or another module on the host server 236, includes program instructions that, when implemented by the processor 260, communicate with the display interface 252 to graphically display at least one performance value retrieved from the database 246 and/or the performance look-up table 248. In this embodiment, the administrator communicates with the host server 236 to selectively display performance parameter data for one or more devices 200 to allow for more useful interpretation of the acquired performance data.

In one exemplary operation, timestamp, application identification and screen identification are optional portions of the system snapshot of performance parameter values communicated to the host server 236 upon request. Although none of these performance parameters will likely reflect a system failure, these values provide information regarding application and screen usage overall, at particular points in time and as compared to contemporaneous hardware performance. These performance parameters further function to provide information about application and specific screen usage and, accordingly, allow a user, administrator and/or OEM access to device 200 performance with respect to third party software applications as well as OEM installed applications. Third party software applications can be designed according to an OEM software development kit which provides a framework for logging application and screen ID parameter values such as by communication with the display interface 232 and/or monitoring module 224. Accordingly, the performance parameter information can be graphically displayed by the analyzer module 244, or any other module of the host server 236, to allow the administrator to more effectively view which applications are used at particular times and average time spent by a user on a particular screen, for example.

Other permutations and graphical displays of the parameter value data are also possible such as displaying the performance value data of several devices 200 simultaneously to determine the health of comparable system components and/or overall device 200 health and displaying the performance parameter values of one device 200 simultaneously with the current performance look-up table 248 values to determine those system components nearing failure. Other graphical displays of performance parameter data are also contemplated.

While the principles of the invention have been described herein, it is to be understood by those skilled in the art that this description is made only by way of example and not as a limitation as to the scope of the invention. In particular, certain performance parameters used herein are exemplary and not intended to limit the invention, whose scope is defined by the appended claims.

## Claims

1. An apparatus comprising:
a data storage means (242); and
a processor (260), the data storage means (242) including program instructions that, when implemented by the processor (260), cause the apparatus to:
receive, from at least one remote device, at least one performance parameter value associated with a component of the at least one remote device;
compare the at least one performance parameter value with at least one failure value associated with the component, wherein the at least one failure value is based on at least one calculated failure value, and wherein the at least one calculated failure value is based on an average of a current failure value and at least one predetermined failure value, the current failure value being the value received contemporaneously with the last failure of the component;
determine that a likelihood of failure of the component of the at least one remote device is at a predefined likelihood in an instance in which the at least one performance parameter value meets the at least one failure value; and
selectively transmit a notification based on the determined likelihood of failure in a form set by a predefined trigger condition.

2. The apparatus of claim 1, wherein the data storage means (242) further comprises:
a database (246) configured to store the at least one performance parameter value; and
a performance look-up table (248) configured to store the at least one calculated failure value.

3. The apparatus of claim 1 wherein the at least one performance parameter value is selected from the group consisting of accumulated processor run time, processor failure, network interface throughput, image engine to memory transmission time, memory utilization, full memory utilization failure, memory read/write failure, battery level, battery failure, primary power source failure, network connection failure, timestamp, application identification, screen identification, battery charge/discharge cycles, dock/undock cycles, dock interface failure, keypad/trigger presses, keypad/trigger failure, display failure, touch screen presses, and touch screen presses per unit area.

4. The apparatus of claim 1 wherein the at least one performance parameter value includes at least one error code.

5. The apparatus of claim 4 further including a device manufacturer interface (290) wherein the processor (260) is configured to communicate the at least one error code to the device manufacturer interface wherein the device manufacturer interface includes an error code look-up table (294) having at least one entry for each error code wherein each entry further includes information related to an error.

6. The apparatus of claim 1 wherein the processor (260) is further configured to automatically transmit the notification based on the predefined trigger condition.

7. The apparatus of claim 6 wherein the notification is selected from the group consisting of a graphical display communicated to a display interface (252), an e-mail, the at least one remote device (200), and a return material authorization, RMA.

8. The apparatus of claim 7 wherein the notification is an RMA and the processor (260) is further configured to retrieve at least one remote device identifier from at least one remote device (200) and wherein the return material authorization includes the remote device identifier.

9. The apparatus of claim 1, wherein the at least one failure value is based on at least one calculated failure value, and wherein the at least one calculated failure value is based on at least one historical performance parameter that includes an error code.

10. A method of monitoring remote devices (200), comprising:
receiving, from at least one remote device, at least one performance parameter value communicated from the at least one remote device (200);
comparing the at least one performance parameter value with at least one failure value associated with a component of the at least one remote device (200), wherein the at least one failure value is based on at least one calculated failure value, and wherein the at least one calculated failure value is based on an average of a current failure value and at least one predetermined failure value, the current failure value being the value received contemporaneously with the last failure of the component;
determining that a likelihood of failure of the component of the at least one remote device is at a predefined likelihood in an instance in which the at least one performance parameter value meets the at least one failure value; and
selectively transmit a notification based on the determined likelihood of failure in a form set by a predefined trigger condition.

11. The method of claim 10 wherein the notification is selected from the group consisting of a graphical display communicated to a display interface (252), an e-mail, the at least one remote device (200), a return material authorization, and a graphical display displaying performance value information according to input from a host server administrator.

12. The method of claim 10 further comprising selectively transmitting an error code to a remote device manufacturer interface (290) and retrieving error condition information corresponding to the error code.

13. The method of claim 10, wherein the at least one performance parameter value is selected from the group consisting of accumulated processor run time, processor failure, network interface throughput, image engine to memory transmission time, memory utilization, full memory utilization failure, memory read/write failure, battery level, battery failure, primary power source failure, network connection failure, timestamp, application identification, screen identification, battery charge/discharge cycles, dock/undock cycles, dock interface failure, keypad/trigger presses, keypad/trigger failure, display failure, touch screen presses, and touch screen presses per unit area.

## Patentansprüche

1. Gerät, umfassend:
eine Datenspeichereinrichtung (242); und
einen Prozessor (260), wobei die Datenspeichereinrichtung (242) Programmbefehle einschließt, die, wenn sie durch den Prozessor (260) implementiert werden, das Gerät veranlassen zum:
Empfangen, von mindestens einer ferngesteuerten Vorrichtung, mindestens eines Leistungsparameterwerts, der einer Komponente der mindestens einen ferngesteuerten Vorrichtung zugeordnet ist;
Vergleichen des mindestens einen Leistungsparameterwerts mit mindestens einem Fehlerwert, der der Komponente zugeordnet ist, wobei der mindestens eine Fehlerwert auf mindestens einem berechneten Fehlerwert basiert, und wobei der mindestens eine berechnete Fehlerwert auf einem Mittelwert aus einem aktuellen Fehlerwert und mindestens einem vorbestimmten Fehlerwert basiert, wobei der aktuelle Fehlerwert der gleichzeitig mit dem letzten Fehler der Komponente empfangene Wert ist;
Bestimmen, dass eine Fehlerwahrscheinlichkeit der Komponente der mindestens einen ferngesteuerten Vorrichtung in einem Fall bei einer vordefinierten Wahrscheinlichkeit liegt, in dem der mindestens eine Leistungsparameterwert den mindestens einen Fehlerwert erfüllt; und
selektives Übertragen einer Benachrichtigung basierend auf der bestimmten Fehlerwahrscheinlichkeit in einer Form, die durch eine vordefinierte Auslösebedingung festgelegt ist.

2. Gerät nach Anspruch 1, wobei die Datenspeichereinrichtung (242) ferner umfasst:
eine Datenbank (246), die so konfiguriert ist, dass sie den mindestens einen Leistungsparameterwert speichert; und
eine Leistungsnachschlagetabelle (248), die so konfiguriert ist, dass sie den mindestens einen berechneten Fehlerwert speichert.

3. Gerät nach Anspruch 1, wobei der mindestens eine Leistungsparameterwert ausgewählt ist aus der Gruppe, bestehend aus akkumulierter Prozessorlaufzeit, Prozessorfehler, Netzwerkschnittstellendurchsatz, Übertragungszeit von Bildmodul zu Speicher, Speicherauslastung, Fehler bei vollständiger Speicherauslastung, Speicherlese-/schreibfehler, Batteriestand, Batteriefehler, Primärstromquellenfehler, Netzwerkverbindungsfehler, Zeitstempel, Anwendungsidentifikation, Bildschirmidentifikation, Batterie-Lade-/Entladezyklen, Andock-/Abdockzyklen, Dockschnittstellenfehler, Tastatur-/Auslösebetätigungen, Tastatur-/Auslösefehler, Anzeigefehler, Touchscreen-Betätigungen und Touchscreen-Betätigungen pro Flächeneinheit.

4. Gerät nach Anspruch 1, wobei der mindestens eine Leistungsparameterwert mindestens einen Fehlercode einschließt.

5. Gerät nach Anspruch 4, die ferner eine Vorrichtungsherstellerschnittstelle (290) einschließt, wobei der Prozessor (260) so konfiguriert ist, dass er den mindestens einen Fehlercode an die Vorrichtungsherstellerschnittstelle übermittelt, wobei die Vorrichtungsherstellerschnittstelle eine Fehlercode-Nachschlagetabelle (294) einschließt, die mindestens einen Eintrag für jeden Fehlercode aufweist, wobei jeder Eintrag ferner Informationen einschließt, die mit einem Fehler in Zusammenhang stehen.

6. Gerät nach Anspruch 1, wobei der Prozessor (260) ferner so konfiguriert ist, dass er die Benachrichtigung basierend auf der vordefinierten Auslösebedingung automatisch überträgt.

7. Gerät nach Anspruch 6, wobei die Benachrichtigung ausgewählt ist aus der Gruppe, bestehend aus einer grafischen Anzeige, die an eine Anzeigeschnittstelle (252) übermittelt wird, einer E-Mail, der mindestens einen ferngesteuerten Vorrichtung (200) und einer Return Material Authorization, RMA.

8. Gerät nach Anspruch 7, wobei die Benachrichtigung eine RMA ist, und der Prozessor (260) ferner so konfiguriert ist, dass er mindestens eine Kennung einer ferngesteuerten Vorrichtung von mindestens einer ferngesteuerten Vorrichtung (200) abruft, und wobei die Return Material Authorization die Kennung der ferngesteuerten Vorrichtung einschließt.

9. Gerät nach Anspruch 1, wobei der mindestens eine Fehlerwert auf mindestens einem berechneten Fehlerwert basiert, und wobei der mindestens eine berechnete Fehlerwert auf mindestens einem historischen Leistungsparameter basiert, der einen Fehlercode einschließt.

10. Verfahren zum Überwachen ferngesteuerter Vorrichtungen (200), umfassend:
Empfangen, von mindestens einer ferngesteuerten Vorrichtung, mindestens eines Leistungsparameterwerts, der von der mindestens einen ferngesteuerten Vorrichtung (200) übermittelt wird;
Vergleichen des mindestens einen Leistungsparameterwerts mit mindestens einem Fehlerwert, der einer Komponente der mindestens einen ferngesteuerten Vorrichtung (200) zugeordnet ist, wobei der mindestens eine Fehlerwert auf mindestens einem berechneten Fehlerwert basiert, und wobei der mindestens eine berechnete Fehlerwert auf einem Mittelwert aus einem aktuellen Fehlerwert und mindestens einem vorbestimmten Fehlerwert basiert, wobei der aktuelle Fehlerwert der gleichzeitig mit dem letzten Fehler der Komponente empfangene Wert ist;
Bestimmen, dass eine Fehlerwahrscheinlichkeit der Komponente der mindestens einen ferngesteuerten Vorrichtung in einem Fall bei einer vordefinierten Wahrscheinlichkeit liegt, in dem der mindestens eine Leistungsparameterwert den mindestens einen Fehlerwert erfüllt; und
selektives Übertragen einer Benachrichtigung basierend auf der bestimmten Fehlerwahrscheinlichkeit in einer Form, die durch eine vordefinierte Auslösebedingung festgelegt ist.

11. Verfahren nach Anspruch 10, wobei die Benachrichtigung ausgewählt ist aus der Gruppe, bestehend aus einer grafischen Anzeige, die an eine Anzeigeschnittstelle (252) übermittelt wird, einer E-Mail, der mindestens einen ferngesteuerten Vorrichtung (200), einer Return Material Authorization und einer grafischen Anzeige, die Leistungswertinformationen gemäß der Eingabe von einem Host-Server-Administrator anzeigt.

12. Verfahren nach Anspruch 10, das ferner das selektive Übertragen eines Fehlercodes an eine ferngesteuerte Vorrichtungsherstellerschnittstelle (290) und das Abrufen von Fehlerbedingungsinformationen entsprechend dem Fehlercode umfasst.

13. Verfahren nach Anspruch 10, wobei der mindestens eine Leistungsparameterwert ausgewählt ist aus der Gruppe, bestehend aus akkumulierter Prozessorlaufzeit, Prozessorfehler, Netzwerkschnittstellendurchsatz, Übertragungszeit von Bildmodul zu Speicher, Speicherauslastung, Fehler bei vollständiger Speicherauslastung, Speicherlese-/schreibfehler, Batteriestand, Batteriefehler, Primärstromquellenfehler, Netzwerkverbindungsfehler, Zeitstempel, Anwendungsidentifikation, Bildschirmidentifikation, Batterie-Lade-/Entladezyklen, Andock-/Abdockzyklen, Dockschnittstellenfehler, Tastatur-/Auslösebetätigungen, Tastatur-/Auslösefehler, Anzeigefehler, Touchscreen-Betätigungen und Touchscreen-Betätigungen pro Flächeneinheit.

## Revendications

1. Appareil comprenant :
un support de stockage de données (242) ; et
un processeur (260), le support de stockage de données (242) comprenant des instructions de programme qui, lorsqu'elles sont mises en oeuvre par le processeur (260), amènent l'appareil à :
recevoir, en provenance d'au moins un dispositif distant, au moins une valeur de paramètre de performances associée à un composant du au moins un dispositif distant ;
comparer la au moins une valeur de paramètre de performances avec au moins une valeur de défaillance associée au composant, dans lequel la au moins une valeur de défaillance est basée sur au moins une valeur de défaillance calculée et dans lequel la au moins une valeur de défaillance calculée est basée sur une moyenne d'une valeur de défaillance courante et d'au moins une valeur de défaillance prédéterminée, la valeur de défaillance courante étant la valeur reçue simultanément à la dernière défaillance du composant ;
déterminer qu'une probabilité de défaillance du composant du au moins un dispositif distant se situe à une probabilité prédéfinie dans un cas dans lequel la au moins une valeur de paramètre de performances correspond à la au moins une valeur de défaillance ; et
transmettre sélectivement une notification sur la base de la probabilité de défaillance déterminée sous une forme établie par une condition de déclenchement prédéfinie.

2. Appareil selon la revendication 1, dans lequel le support de stockage de données (242) comprend en outre :
une base de données (246) configurée pour stocker la au moins une valeur de paramètre de performances ; et
une table de consultation de performances (248) configurée pour stocker la au moins une valeur de défaillance calculée.

3. Appareil selon la revendication 1, dans lequel la au moins une valeur de paramètre de performances est sélectionnée dans le groupe constitué par le temps d'exécution cumulé de processeur, la défaillance de processeur, le débit d'interface réseau, le temps de transmission entre moteur d'image et mémoire, l'utilisation de la mémoire, la défaillance d'utilisation de la mémoire complète, la défaillance de lecture/écriture de mémoire, le niveau de batterie, la défaillance de la batterie, la défaillance de la source d'alimentation primaire, la défaillance de la connexion réseau, l'horodateur, l'identification d'application, l'identification d'écran, les cycles de charge/décharge de batterie, les cycles de connexion/déconnexion, la défaillance d'interface de station d'accueil, les pressions sur le clavier/déclencheur, la défaillance du clavier/déclencheur, la défaillance d'affichage, les pressions sur l'écran tactile et les pressions sur l'écran tactile par unité de surface.

4. Appareil selon la revendication 1, dans lequel la au moins une valeur de paramètre de performances comprend au moins un code d'erreur.

5. Appareil selon la revendication 4, comprenant en outre une interface de fabricant de dispositif (290), dans lequel le processeur (260) est configuré pour communiquer le au moins un code d'erreur à l'interface de fabricant de dispositif, dans lequel l'interface de fabricant de dispositif comprend une table de consultation de codes d'erreur (294) ayant au moins une entrée pour chaque code d'erreur, dans lequel chaque entrée comprend en outre des informations relatives à une erreur.

6. Appareil selon la revendication 1, dans lequel le processeur (260) est en outre configuré pour transmettre automatiquement la notification sur la base de la condition de déclenchement prédéfinie.

7. Appareil selon la revendication 6, dans lequel la notification est sélectionnée dans le groupe constitué d'un affichage graphique communiqué à une interface d'affichage (252), d'un e-mail, du au moins un dispositif distant (200) et d'une autorisation de retour de matériel, RMA.

8. Appareil selon la revendication 7, dans lequel la notification est une RMA et le processeur (260) est en outre configuré pour récupérer au moins un identifiant de dispositif distant à partir d'au moins un dispositif distant (200) et dans lequel l'autorisation de retour de matériel comprend l'identifiant de dispositif distant.

9. Appareil selon la revendication 1, dans lequel la au moins une valeur de défaillance est basée sur au moins une valeur de défaillance calculée et dans lequel la au moins une valeur de défaillance calculée est basée sur au moins un paramètre de performances historiques qui comprend un code d'erreur.

10. Procédé de surveillance de dispositifs distants (200), comprenant :
la réception, en provenance d'au moins un dispositif distant, d'au moins une valeur de paramètre de performances communiquée par le au moins un dispositif distant (200) ;
la comparaison de la au moins une valeur de paramètre de performances avec au moins une valeur de défaillance associée à un composant du au moins un dispositif distant (200), dans lequel la au moins une valeur de défaillance est basée sur au moins une valeur de défaillance calculée et dans lequel la au moins au moins une valeur de défaillance calculée est basée sur une moyenne d'une valeur de défaillance courante et d'au moins une valeur de défaillance prédéterminée, la valeur de défaillance courante étant la valeur reçue simultanément à la dernière défaillance du composant ;
la détermination qu'une probabilité de défaillance du composant du au moins un dispositif distant se situe à une probabilité prédéfinie dans un cas dans lequel la au moins une valeur de paramètre de performances correspond à la au moins une valeur de défaillance ; et
la transmission sélective d'une notification sur la base de la probabilité de défaillance déterminée sous une forme établie par une condition de déclenchement prédéfinie.

11. Procédé selon la revendication 10, dans lequel la notification est sélectionnée dans le groupe constitué d'un affichage graphique communiqué à une interface d'affichage (252), d'un e-mail, du au moins un dispositif distant (200), d'une autorisation de retour de matériel et d'un affichage graphique affichage affichant des informations de valeur de performances selon l'entrée d'un administrateur de serveur hôte.

12. Procédé selon la revendication 10, comprenant en outre la transmission sélective d'un code d'erreur à une interface de fabricant de dispositif distant (290) et la récupération d'informations d'état d'erreur correspondant au code d'erreur.

13. Procédé selon la revendication 10, dans lequel la au moins une valeur de paramètre de performances est sélectionnée dans le groupe constitué par le temps d'exécution cumulé de processeur, la défaillance de processeur, le débit d'interface réseau, le temps de transmission entre moteur d'image et mémoire, l'utilisation de mémoire, la défaillance d'utilisation de mémoire complète, la défaillance de lecture/écriture de mémoire, le niveau de batterie, la défaillance de batterie, la défaillance de source d'alimentation primaire, la défaillance de connexion réseau, l'horodateur, l'identification d'application, l'identification d'écran, les cycles de charge/décharge de batterie, les cycles de connexion/déconnexion, la défaillance d'interface de station d'accueil, les pressions sur le clavier/déclencheur, la défaillance du clavier/déclencheur, la défaillance d'affichage, les pressions sur l'écran tactile et les pressions sur l'écran tactile par unité de surface.
